# EUROPEAN PATENT APPLICATION

(11) **EP 1 124 336 A1**
(43) Date of publication of application: **16.08.2001**
(21) Application number: 00102830.7
(22) Date of filing: 11.02.2000
(51) Int. Cl.: H04B 1/48

(54) **Transmit-receive switch for a radio transceiver**

(71) Applicant: ROBERT BOSCH GMBH, 70442 Stuttgart (DE)
(72) Inventor: Faessler, Georg, 9440 Aabybro (DK)

(57) **Abstract**

The invention relates to a radio station for transmitting and/or receiving radio signals. An internal antenna (6) of the radio station to which a transmitting and/or a receiving part are connected is matched to either part by using a broadband matching network (5) for a broadband matching and a suppression of harmonics. The broadband matching network (5) consists of resonator circuits and/or impedance inverters. The impedance inverters and the resonator circuits are realised either by discrete or distributed elements. For an impedance inverter a quarter wavelength transformer can be used.

## Description

### Prior art

The invention relates to a radio station in accordance with a generic class of the independent patent claim.

Microwave circuit elements in mobile phones as radio stations are commonly matched to fifty ohms. Matching networks and circuit elements in order to increase the bandwidth of the internal antenna of a mobile phone are integrated with the internal antenna. Internal antennas of mobile phones, however, exhibit a low resistance, if near to a ground plane leading to a limited bandwidth.

### Advantages of the invention

The radio station having the characterising features of the independent patent claim has the advantage to exhibit an increase of bandwidth and simultaneously a suppression of unwanted harmonics generated by the power amplifier. In addition, the radio station shows less volume leading to smaller mobile phones.

The features of the dependent claims enable further improvements of the invention.

It is an advantage to use resonator circuits for broadband matching because they are easy to realise and fabricate. The same holds for impedance inverters.

Moreover, it is an advantage that by alternating series and parallel resonator circuits an improved broadband matching and a better suppression of harmonics are achieved.

Apart from this, it is an advantage that resonator circuits and impedance inverters are realised either using discrete elements or distributed elements depending on the part of the frequency spectrum used for communications. The higher the frequency the more useful is the use of distributed elements.

Furthermore, it is an advantage to realise an impedance inverter by using a so-called quarter wavelength transformer which is a transmission line with a length of a quarter wavelength.

### Drawings

Exemplary embodiments of the invention are shown in the figures and elucidated in detail in the description below. Figure 1 shows a radio station after the invention, figure 2 shows the compensation of the internal antenna with a parallel resonator as the equivalent circuit, figure 3 shows the compensation of the internal antenna with a series resonator as the equivalent circuit, figure 4 shows the compensation of the internal antenna using two impedance inverters, figure 5 shows a circuit for realising an impedance inverter with inductors, figure 6 shows a circuit for realising an impedance inverter with capacitors and figure 7 shows how to realise an impedance inverter with a quarter wavelength transformer.

### Description

The trend for mobile phones is to become smaller and simultaneously more powerful especially in respect of more broadband services. GSM (Global system for mobile communication), a digital cellular radio network for mobile phones, offers transmission rates of up to 9.6 kb/sec but new improvements of GSM entail an increase to several 100 Mb/sec in bandwidth in a first stage. This demonstrates the necessity to make mobile phones adapting to broadband communications. This urgent need is amplified by the introduction of UMTS (Universal Mobile Telecommunication System) in a few years time. UMTS is especially suited to broadband data communications.

After the invention broadband matching is applied to internal antennas in radio stations. This is done by compensating a parallel resonator with a series resonator and vice versa. By cascading parallel and series resonators an improved broadband matching and a better suppression of harmonics are achieved. Using an impedance inverter for linking resonators an alternative broadband matching technique is realised. Depending which is the most appropriate equivalent circuit for the internal antenna, a series resonator or a parallel resonator, compensating resonant circuits are applied for broadband matching.

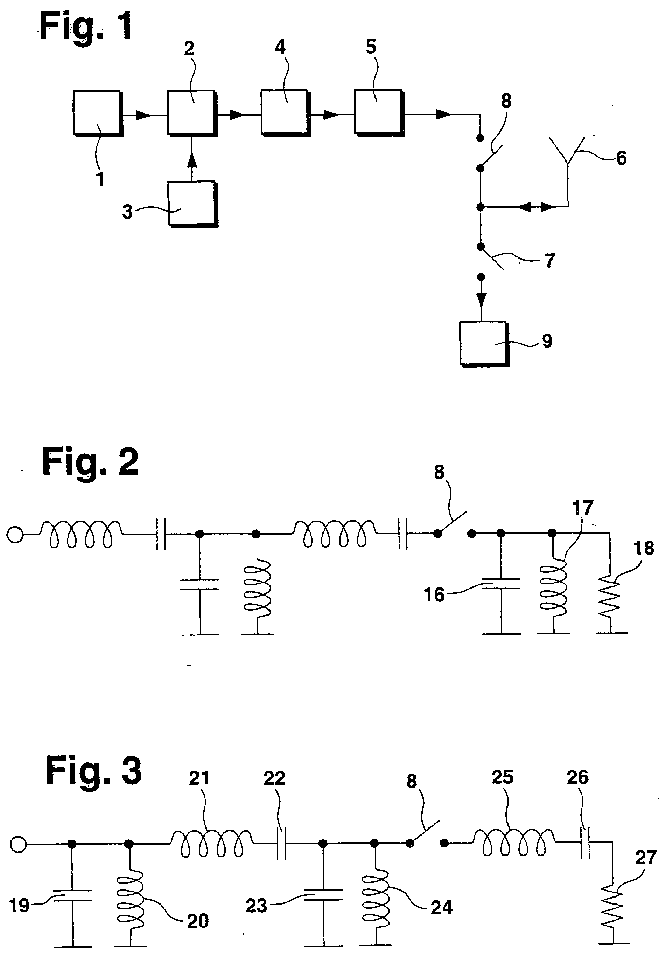

In figure 1, a radio station after the invention is shown. A data source 1 is connected to a first input of an up-converter 2. A local oscillator 3 is connected to a second input of the up converter 2. The output of the up-converter 2 is transferred to an input of a power amplifier 4. The output of the power amplifier 4 is connected to an input of a broadband matching network 5. An output of the broadband matching network 5 is connected to a switch 8. The other side of the switch 8 is connected to a switch 7 and to an antenna 6. At the other side of the switch 7 a receiving part 9 of the radio station is connected.

The data source 1 is a microphone with attached electronics for amplifying the signals coming from the microphone and processing them. Alternatively, control elements such as a keyboard can be used as the data source 1 whereby these control elements can be multiplexed with the microphone and its attached electronics so that every signal from different data sources is transferred to the up-converter 2.

The up-converter 2 converts the signals coming from the data source 1 to the transmitting frequency using signals coming from the local oscillator 3. The local oscillator 3 generates a harmonic signal at a fixed frequency. The up-converter 2 is therefore a multiplier multiplying the signals from the local oscillator 3 and the data source 1. As a multiplier an non-linearity is needed. Such a non-linearity is provided by a current voltage characteristic of a diode or a transistor. If two signals having two frequencies are multiplied the resulting product exhibits a signal component at a frequency which is the sum of the two frequencies of the two signals. The up-converter 2 is designed, so that a maximum amount of signal from the data source 1 is up-converted to the sum frequency.

Generally the modulation is as follows, two sinusoidal radio frequency (RF) signals with a phase difference of 90 degrees are generated and the two data signals I (in-phase) and Q (quadratur-phase) are multiplied with these carriers. Afterwards, the two RF signals are added together.

Presenting this in a complex plane (real axis to the right and imaginary axis to the top) shows the I signal on the real axis and the Q signal on the imaginary axis. The simplest modulation is a 1 and -1 at the I and Q outputs, which then gives four states of different phases (45,135,225 and 315). This is called 4PSK (4 state phase shift keying). The disadvantage is that the phase shift is done immediately when changing an I or Q signal. This would require infinite bandwidth, so that a more smooth transition is preferred. The modulation applied for GSM is GPSK (Gaussian Phase Shift Keying), which gives the highest throughput in bits for a given bandwidth.

The power amplifier 4 is designed in a way so that the signal at the up-converted frequency is amplified by the power amplifier 4. The power amplifier 4 consists here of several stages to achieve a higher gain than it is possible with only one stage. Each stage exhibits a transistor in common-emitter configuration. The common-emitter configuration is used if a transistor is employed as an amplifier. If the amplification of one stage is sufficient, only one stage can be alternatively used.

The broadband matching network 5 matching the output impedance of the power amplifier 4 and the input impedance of the internal antenna 6 is realised by using resonator circuits.

The switches 7 and 8 are transistors or PIN diodes, whereas the receiving part 7 exhibits an amplifier, filters, a down-converter, an analogue-digital converter, a processor and a data sink which is here a speaker with attached electronics but it can also be a display.

In figure 2, a first embodiment of the realisation of the broadband matching network 5 is shown. At the input an inductor 10 is placed. At the other side the inductor 10 is connected to a capacitor 11. The capacitor 11 is connected at its other side to a capacitor 12 which is then connected to ground, to an inductor 13 which is also then connected to ground and to an inductor 14 which is connected at its other side to a capacitor 15. The circuit elements with the reference numbers 10 to 15 are the broadband matching network 5. They are switched together as a so called T-network in electrical engineering.

The capacitor 15 is connected at its other side to a switch 8. The switch 8 is connected at its other side to a capacitor 16, to an inductor 17 and to a resistor 18. These three circuit elements form the equivalent circuit of the internal antenna 6. The circuit elements 16 to 18 are connected at their other side to mass.

Since the internal antennas represented by a parallel resonator as the equivalent circuit it must be compensated first by a series resonator which is here realised by the circuit elements 14 and 15. A second stage comprises the circuit elements 12 and 13 forming a parallel resonator which is useful for compensation a series resonator. The third compensation stage consists of the circuit elements 10 and 11. Again a series resonator is necessary since they have to compensate the precedent parallel resonator. After the inductor 10 the power amplifier 4 follows. The connection to the receiving part of the mobile phone is here omitted.

Figure 3 shows another realisation of the broadband matching network 5, here a Π-network is employed. A capacitor 19 is connected at one side to mass and at the other side to an inductor 20 and to an inductor 21. The inductor 20 is in parallel with the capacitor 19. Therefore, the inductor 20 is also connected to mass at its other side. The inductor 21 is connected at its other side to a capacitor 22. The capacitor 21 is connected at its other side to a capacitor 23, to an inductor 24 and to the switch 8. The capacitor 23 and the inductor 24 are connected to mass at their other side. The switch 8 is connected at its other side to an inductor 25. The inductor 25 is connected at its other side to a capacitor 26. The capacitor 26 is in series with a resistor 27 which is finally connected to mass.

Here, the circuit elements 25 to 27 form the equivalent circuit of the internal antenna 6. A series resonator circuit is chosen here. Therefore, the first compensating resonator must be a parallel resonator. The circuit elements 23 and 24 are together this parallel resonator. After this parallel resonator a series resonator must follow, so the circuit elements 21 and 22 are together this series resonator. And as the first stage again a parallel resonator is necessary. The circuit elements 19 and 20 form this circuit.

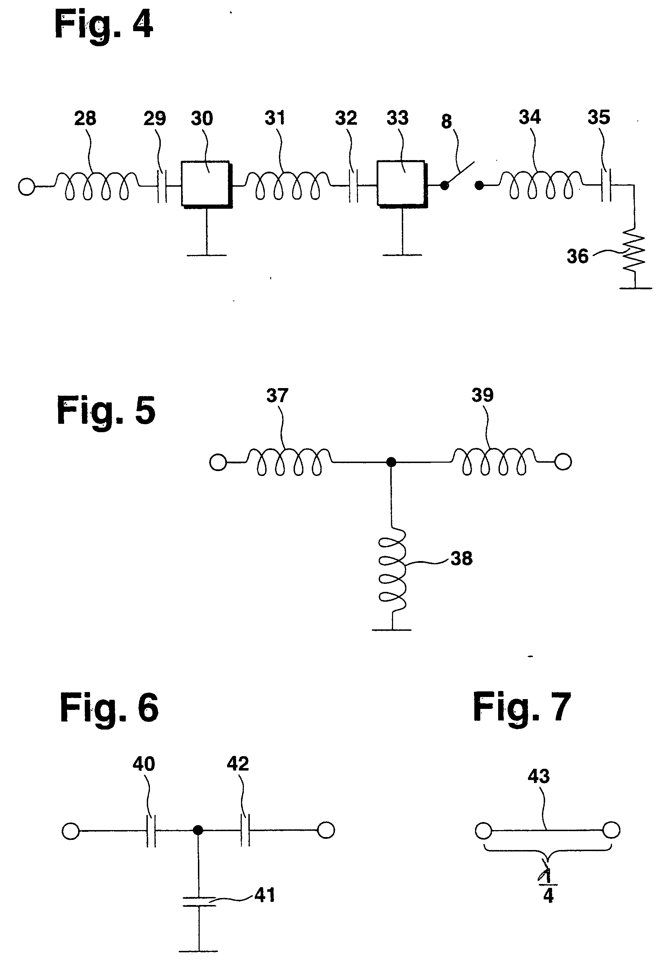

Figure 4 shows a third embodiment of the matching network 5 with the switch 8 and an equivalent circuit of the internal antenna 6. An inductor 28 is at the input and on its other side connected to a capacitor 29. Then follows a first impedance inverter 30 which is connected to mass and over a third output to an inductor 31. At its other side the inductor 31 is connected to a capacitor 32. The capacitor 32 is connected at its other side to an impedance inverter 33. The impedance inverter 33 is connected over a first output to mass and over a second output to the switch 8. The switch 8 is connected at its other side to an inductor 34. The inductor 34 is then connected at its other side to a capacitor 35. The capacitor 35 is connected at its other side to a resistor 36 which is then connected at its other side to mass.

Circuit elements 34 to 36 form a series resonator circuit which is the equivalent circuit of the internal antenna 6. The elements 31 to 33 and 28 to 30 form each a compensating stage with an impedance inverter.

In figure 5, a realisation of the impedance inverter is shown using only inductors. Inductors 37, 38 and 39 are switched together as a T-circuit. Only the inductor 38 is connected to mass. The inductor 38 has got the inductance L whereas the inductor 37 and 39 have got the inductance -L. A capacitor with the same blind resistance at resonant frequency will be used in practice. Or an inductor present in a resonator following the impedance inverter will be reduced by the value -L.

In figure 6, another realisation with only capacitors is shown. Again a T-circuit is used for switching together the capacitors 40, 41 and 42. Only the capacitor 41 is connected to mass and all capacitors are connected together. The capacitor 41 has the capacitance C, whereas the capacitors 40 and 42 show the capacitance -C.

In figure 7, another realisation of the impedance inverter is shown. Here, a quarter wavelength transformer 423 is used.

After the broadband matching network 5 the switch 8 follows. The switch 8 is realised either by using a transistor or a PIN diode. The same holds for the switch 7. The receiving part 9 exhibits an amplifier, filters, a digitising circuit and a processor.

Whenever a T- or a Π-circuit is used an equivalent Π- or T-circuit can be used.

## Claims

1. Radio station for transmitting and/or receiving radio signals, an internal antenna (6) transmitting and/or receiving radio signals, a transmitting part of the radio station and/or a receiving part (9) of the radio station being connected to the internal antenna (6) characterised in that a connection between the internal antenna (6) and the transmitting part of the radio station and/or receiving part of the radio station consists of a broadband matching network (5).

2. Radio station according to claim 1, characterised in that, the said broadband matching network (5) consists of at least one resonator circuit.

3. Radio station according to claim 1, characterised in that the said broadband matching network (5) consists of at least one resonator circuit and at least one impedance inverter.

4. Radio station according to claim 2 or 3, characterised in that a series resonator circuit follows a parallel resonator circuit and that a parallel resonator circuit follows the series resonator circuit.

5. Radio station according to claim 4, characterised in that the resonator circuit consists of discrete circuit elements.

6. Radio station according to claim 4, characterised in that the resonator circuit consists of distributed elements.

7. Radio station according to a precedent claim, characterised in that the impedance inverter consists of a transmission line with a quarter wave length.
